# EUROPEAN PATENT APPLICATION

(11) **EP 4 650 783 A1**
(43) Date of publication of application: **19.11.2025**
(21) Application number: 23916259.7
(22) Date of filing: 21.12.2023
(51) Int. Cl.: G01N 35/00

(54) **AUTOMATED ANALYZING DEVICE AND METHOD FOR DETERMINING WATER LEAKAGE FROM SAME**

(30) Priority: 13.01.2023 JP 2023003688
(71) Applicant: HITACHI HIGH-TECH CORPORATION, Tokyo 105-6409 (JP)
(72) Inventor: SAITA Aki, Tokyo 105-6409 (JP); TAMEZANE Hideto, Tokyo 105-6409 (JP); ZHOU Guangbin, Tokyo 105-6409 (JP); MUKAIYAMA Naoki, Tokyo 105-6409 (JP); YABUTANI Hisashi, Tokyo 105-6409 (JP)
(74) Representative: MERH-IP Matias Erny Reichl Hoffmann Patentanwälte PartG mbB
(86) International application number: PCT/JP2023/046023
(87) International publication number: WO 2024/150645

(57) **Abstract**

Provided is an automatic analyzer capable of determining whether water leaks without adding a new component or a control pattern thereof. The automatic analyzer according to the invention includes: a dispensing nozzle configured to dispense a specimen or reagent; a pressure generation source configured to generate a pressure within the dispensing nozzle; a flow passage via which the pressure generation source and the dispensing nozzle communicate with each other; a pressure sensor configured to detect a pressure in the flow passage; an electromagnetic valve provided in the flow passage, the electromagnetic valve being configured to open and close the flow passage; and a control unit configured to determine whether water leaks based on a change in pressure data associated with aspiration or discharge of air by the dispensing nozzle.

## Description

### Technical Field

The present invention relates to an automatic analyzer and a water leakage determination method.

### Background Art

A dispensing mechanism of an automatic analyzer that performs quantitative and qualitative analysis of blood, urine, and the like includes an electromagnetic valve for adjusting a pressure of a dispensing syringe when a specimen or a reagent is aspirated or discharged, a pressure sensor that detects a pressure in a dispensing flow passage, and the like. If foreign matter enters the electromagnetic valve or the dispensing flow passage deteriorates over time, water may leak from the dispensing mechanism due to an operation failure of the electromagnetic valve or a failure of a flow passage state. Therefore, an automatic analyzer having a function of determining whether water leaks from the dispensing mechanism has been proposed. For example, PTL 1 discloses that a pressure sensor and at least two electromagnetic valves disposed to sandwich the pressure sensor are provided in a flow passage, waveform data of a pressure is acquired using the pressure sensor in a state where each electromagnetic valve is closed, and whether water leaks in the flow passage is determined by comparing the acquired data with data in a normal state.

### Citation List

### Patent Literature

PTL 1: JP2020-16449A

### Summary of Invention

### Technical Problem

However, in the technique described in PTL 1, there is a problem that it is necessary not only to add a new component such as an electromagnetic valve but also to add a control pattern of these components.

An object of the invention is to provide an automatic analyzer capable of determining whether water leaks without adding a new component or a control pattern thereof. Solution to Problem

In order to solve the above-described problem, there is provided an automatic analyzer according to the invention including: a dispensing nozzle configured to dispense a specimen or reagent; a pressure generation source configured to generate a pressure within the dispensing nozzle; a flow passage via which the pressure generation source and the dispensing nozzle communicate with each other; a pressure sensor configured to detect a pressure in the flow passage; an electromagnetic valve provided in the flow passage, the electromagnetic valve being configured to open and close the flow passage; and a control unit configured to determine whether water leaks based on a change in pressure data associated with aspiration or discharge of air by the dispensing nozzle.

### Advantageous Effects of Invention

According to the invention, it is possible to provide an automatic analyzer capable of determining whether water leaks without adding a new component or a control pattern thereof.

### Brief Description of Drawings

[FIG. 1] FIG. 1 is a schematic configuration diagram of an automatic analyzer.
[FIG. 2] FIG. 2 is a schematic view showing a configuration of a dispensing mechanism.
[FIG. 3] FIG. 3 is a block diagram of a configuration related to a water leakage determination process using pressure data detected by a pressure sensor.
[FIG. 4] FIG. 4 is a graph of a pressure waveform acquired by a feature extraction unit when a dispensing nozzle aspirates and discharges air (a solid line shows an example of an abnormal state where water leaks due to an electromagnetic valve failure, and a dotted line shows an example of a normal state where water does not leak).
[FIG. 5] FIG. 5 is a graph of a vibration frequency distribution acquired by the feature extraction unit when the dispensing nozzle aspirates and discharges air (a solid line shows an example of an abnormal state where water leaks due to an electromagnetic valve failure is present, and a dotted line shows an example of a normal state where water does not leak).
[FIG. 6] FIG. 6 is a flowchart showing operations of the automatic analyzer at the time of water leakage determination in Embodiment 1.
[FIG. 7] FIG. 7 is a graph of a pressure waveform acquired by the feature extraction unit when the dispensing nozzle aspirates and discharges air (a solid line shows an example of an abnormal state where water leaks due to a flow passage failure is present, and a dotted line shows an example of a normal state where water does not leak).
[FIG. 8] FIG. 8 is a graph of the same pressure waveform as in FIG. 4 (predetermined thresholds are further added to FIG. 4).
[FIG. 9] FIG. 9 is a flowchart showing operations of the automatic analyzer at the time of water leakage determination in Embodiment 2.

### Description of Embodiments

Hereinafter, an automatic analyzer and a water leakage determination method thereof according to an embodiment of the invention will be described with reference to the drawings.

### Embodiment 1

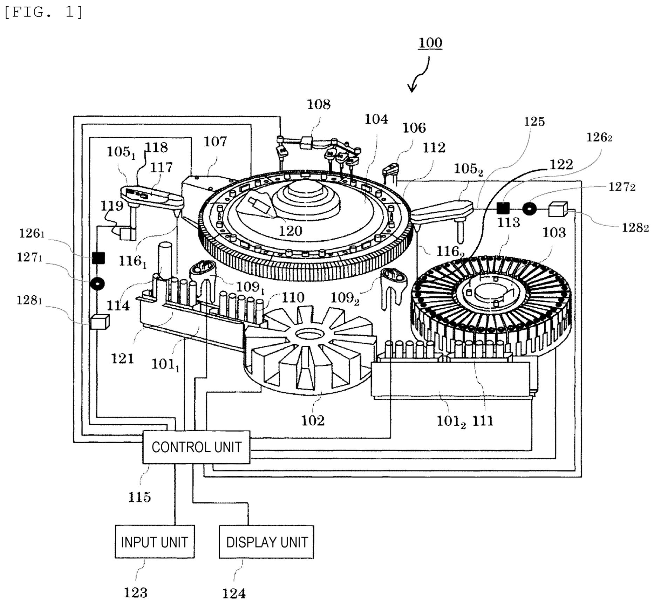

A configuration and an operation of an automatic analyzer according to Embodiment 1 will be described with reference to FIGS. 1 to 6. First, the configuration of the automatic analyzer according to Embodiment 1 will be described with reference to FIG. 1. FIG. 1 is a schematic configuration diagram of the automatic analyzer.

As shown in FIG. 1, an automatic analyzer 100 includes a transport line 101, a reagent disk 103, a reaction disk 104, a dispensing mechanism 105, a stirring mechanism 106, a spectroscope 107, a control unit 115, an input unit 123, a display unit 124, and the like.

The transport line 101 transfers, to a specimen dispensing position 121, a specimen rack 111 holding a specimen container 110 containing a specimen (sample) therein. The dispensing mechanism 105 dispenses the specimen from the specimen container 110 to a reaction cell 112 (reaction container) at the specimen dispensing position 121. The transport line 101 is further connected to a rotor 102. By rotating the rotor 102, the specimen rack 111 is exchanged between the transport line 101 and another transport line 101.

The reagent disk 103 holds a reagent container 113 containing a reagent therein, and rotationally transfers the reagent container 113 to a reagent dispensing position 122. The dispensing mechanism 105 dispenses the reagent from the reagent container 113 to the reaction cell 112 at the reagent dispensing position 122. The reagent is dispensed into the reaction cell 112 by an amount necessary for colorimetric analysis, and reacts with a component in the specimen as an analysis target.

The reaction disk 104 holds the reaction cell 112, and rotationally transfers the reaction cell 112, which is a target of each operation, to a position where the spectroscope 107 that performs colorimetric analysis, the stirring mechanism 106, the reaction cell cleaning mechanism 108, and the like operate. The periphery of the reaction cell 112 is filled with water and the like and maintained at a constant temperature. Accordingly, in a reaction solution which is a mixture of the specimen and the reagent, a chemical reaction between the component in the specimen and the reagent is promoted.

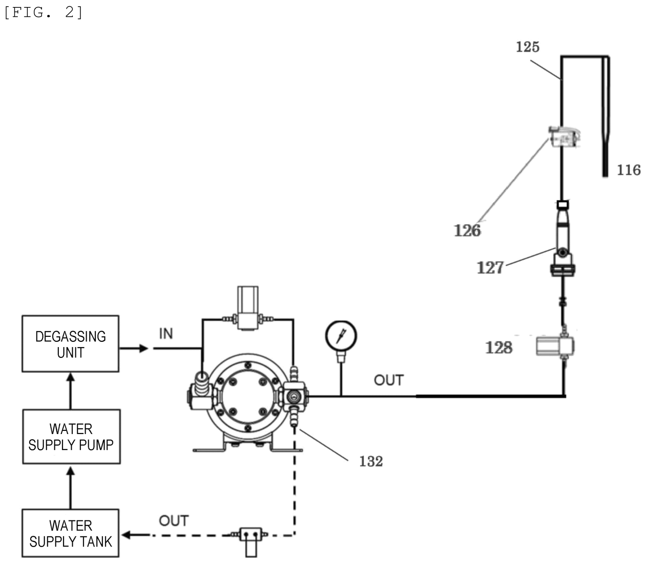

The dispensing mechanism 105 aspirates a specimen to be subjected to colorimetric analysis from the specimen container 110 and discharges the specimen to the reaction cell 112, and aspirates a reagent corresponding to the analysis target from the reagent container 113 and discharges the reagent to the reaction cell 112. The dispensing mechanism 105 includes an arm 118, a dispensing mechanism motor 119, a dispensing nozzle 116, a dispensing flow passage 125, a pressure sensor 126, a dispensing syringe 127, an electromagnetic valve 128, and the like. The arm 118 holds the dispensing nozzle 116 and the liquid level sensor 117. The liquid level sensor 117 detects the presence or absence of a liquid based on a change in capacitance. A shield portion 114 is disposed near a position where the dispensing mechanism 105 performs a dispensing operation. In addition, the dispensing mechanism motor 119, the pressure sensor 126, the dispensing syringe 127, the electromagnetic valve 128, and the like are electrically connected to the control unit 115. The dispensing mechanism motor 119 moves the dispensing mechanism 105 in a vertical direction or a rotation direction. The dispensing nozzle 116, the dispensing flow passage 125, the pressure sensor 126, the dispensing syringe 127, and the electromagnetic valve 128 will be described later with reference to FIG. 2.

The stirring mechanism 106 stirs the reaction solution in the reaction cell 112 in order to promote the reaction between the analysis target component, in the specimen dispensed from the specimen container 110 to the reaction cell 112, and the reagent dispensed from the reagent container 113 to the reaction cell 112.

An LED light source 120 emits output light to the reaction solution stirred and chemically reacted by the stirring mechanism 106. The spectroscope 107 disperses transmitted light that has passed through the reaction solution. Based on the dispersed transmitted light, colorimetric analysis by absorbance measurement is performed.

The reaction cell cleaning mechanism 108 aspirates the reaction solution from the reaction cell 112 for which colorimetric analysis has been completed, and discharges and aspirates a detergent and the like to clean the reaction cell 112.

The nozzle cleaning mechanism 109 cleans a tip end of the dispensing nozzle 116 of the dispensing mechanism 105 that has dispensed the specimen or the reagent. Accordingly, a residue adhering to the dispensing nozzle 116 is removed, and the next analysis target is not affected.

The input unit 123 includes a keyboard, a mouse, a touch panel, and the like, and inputs an instruction from a user to the control unit 115. The display unit 124 includes a liquid crystal display (LCD) and the like, and displays an operation screen and the like.

The control unit 115 includes a processor, a memory, and the like, controls an operation of each mechanism in the automatic analyzer 100, and performs an arithmetic process for obtaining a predetermined component concentration in a specimen (liquid) such as blood or urine. As will be described later, the control unit 115 also determines whether water leaks in the dispensing mechanism 105 based on a change in pressure data associated with aspiration or discharge of air by the dispensing nozzle 116.

The configuration of the automatic analyzer 100 described above is merely an example, and it is possible to separately provide a specimen disk that holds a specimen without including the transport line 101 and the rotor 102, or separately provide a specimen pretreatment system that executes various types of pretreatment on the specimen. In FIG. 1, as the automatic analyzer 100, a device that measures biochemical items is exemplified, but the invention can also be applied to an automatic analyzer that executes different analyses such as immune items in addition to biochemical items.

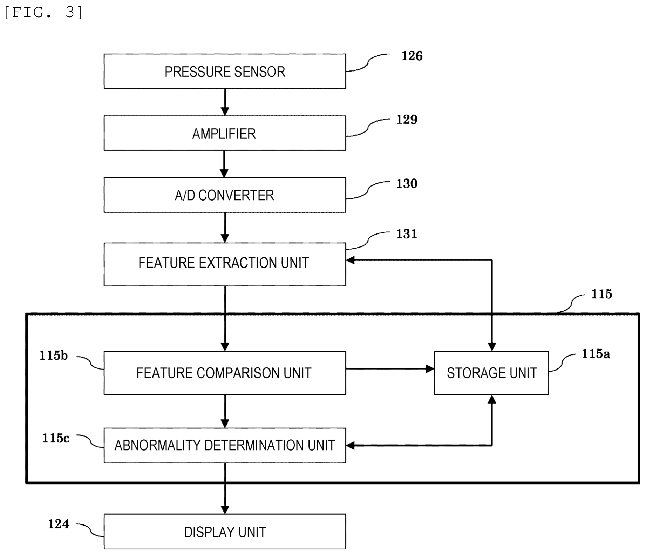

Next, a configuration of the dispensing mechanism 105 and a water leakage determination process in the dispensing mechanism 105 will be described with reference to FIGS. 2 and 3. The dispensing mechanism 105 to be subjected to water leakage determination may be for a specimen or a reagent.

FIG. 2 is a schematic diagram showing a configuration of the dispensing mechanism. As shown in FIG. 2, the dispensing mechanism 105 includes the dispensing nozzle 116, the dispensing flow passage 125, the dispensing syringe 127, a pump 132, the electromagnetic valve 128, the pressure sensor 126, and the like. The dispensing nozzle 116 dispenses the specimen or the reagent. The dispensing flow passage 125 communicates among the dispensing nozzle 116, the pressure sensor 126, the dispensing syringe 127, the electromagnetic valve 128, and the like. The dispensing syringe 127 (pressure generation source) is driven in the vertical direction in a state where the electromagnetic valve 128 is closed, thereby generating, in the dispensing nozzle 116, a pressure for aspirating or discharging the specimen or the reagent. The pump 132 generates a pressure for supplying cleaning water for internal cleaning for cleaning the inside of the dispensing nozzle 116. The electromagnetic valve 128 is provided in the dispensing flow passage 125 between the pump 132 and the dispensing syringe 127, and opens and closes the dispensing flow passage 125. The electromagnetic valve 128 is in an open state only at the timing of supplying the cleaning water for internal cleaning, and is in a closed state at the time of aspiration or discharge of other specimens or reagents, at the time of standby, and the like. The pressure sensor 126 detects the pressure in the dispensing flow passage 125. In addition, the opening and closing of the electromagnetic valve 128, the operation of the dispensing syringe 127, and the like are controlled by the control unit 115 (omitted in FIG. 2). Since the pump 132 is basically constantly driven during the operation of the automatic analyzer 100, the control unit 115 can adjust a state of a fluid and a pressure in the dispensing flow passage 125 by controlling the opening and closing of the electromagnetic valve 128.

FIG. 3 is a block diagram of a configuration related to a water leakage determination process using pressure data detected by the pressure sensor. As shown in FIG. 3, a water leakage determination system includes the pressure sensor 126, an amplifier 129, an A/D converter 130, a feature extraction unit 131, the control unit 115, the display unit 124, and the like. The amplifier 129 amplifies data of a pressure waveform acquired by the pressure sensor 126 and outputs the amplified data to the A/D converter 130. The A/D converter 130 converts the pressure data amplified by the amplifier 129 into a digital signal and outputs the digital signal to the feature extraction unit 131.

After receiving the pressure data converted into the digital signal from the A/D converter 130, the feature extraction unit 131 extracts a feature (determination value) for water leakage determination and sends the extracted feature to the control unit 115. Here, the extraction of the feature means calculating, based on the acquired pressure data, a feature such as a pressure average value (hereinafter, simply referred to as a "pressure average value") in a predetermined period (a period corresponding to a peak or a valley of the pressure waveform), a vibration time width of the pressure waveform, and a vibration frequency of the pressure waveform. Details of a method of extracting each feature in the feature extraction unit 131 will be described later.

As shown in FIG. 3, the control unit 115 includes a storage unit 115a, a feature comparison unit 115b, and an abnormality determination unit 115c. The storage unit 115a stores the pressure data converted into the digital signal by the A/D converter 130, the feature extracted by the feature extraction unit 131, various thresholds set for each electromagnetic valve 128 or each dispensing mechanism 105, and the like. The threshold is used to determine whether water leaks, and is determined in advance based on pressure data and the like acquired in a normal state where there is no water leakage in the dispensing mechanism 105. The feature comparison unit 115b compares the feature extracted by the feature extraction unit 131 with the threshold stored in the storage unit 115a, and sends a comparison result to the abnormality determination unit. The abnormality determination unit 115c determines whether water leaks in the dispensing mechanism 105 using the comparison result in the feature comparison unit 115b.

When the abnormality determination unit 115c determines that water leaks (abnormal), an alarm display signal is output to the display unit 124, and a warning screen is displayed on the display unit 124. Accordingly, an operator can be prompted to take measures such as replacement of a seal piece. In addition, the control unit 115 stops an analysis operation on the specimen. As the displayed warning screen, for example, various methods such as display of a warning lamp with water leakage in addition to display of words such as "water leakage" are conceivable. On the other hand, when the abnormality determination unit 115c determines that water does not leak (normal), the pressure data converted into the digital signal by the A/D converter 130 and the feature extracted by the feature extraction unit 131 are stored in the storage unit 115a, and the analysis operation is started or continued.

The configurations shown in FIGS. 2 and 3 are merely examples. For example, the feature extraction unit 131 may be provided in the control unit 115 or may be regarded as a part of the control unit in a broad sense. In addition, a control unit that controls an operation of each mechanism or obtains a component concentration and a control unit of the water leakage determination system may be separately provided.

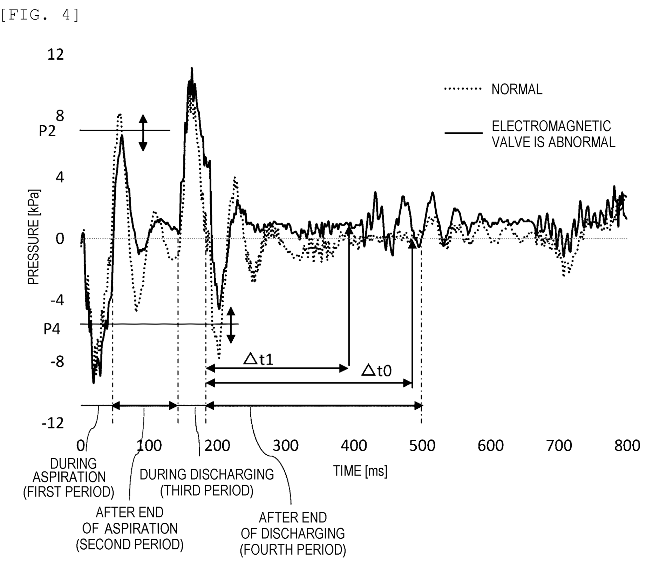

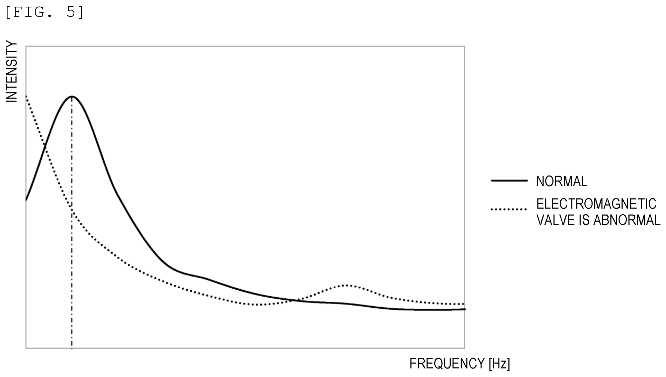

Here, a method of extracting each feature in the feature extraction unit 131 and a comparison method in the feature comparison unit 115b will be described with reference to FIGS. 4 and 5. FIG. 4 is a graph of a pressure waveform acquired by a feature extraction unit when a dispensing nozzle aspirates and discharges air. A solid line shows an example of an abnormal state where water leaks due to an electromagnetic valve failure, and a dotted line shows an example of a normal state where water does not leak. The reason why the air instead of a liquid is aspirated and discharged is that a difference between the normal state and the abnormal state is small in the aspiration and discharge of the liquid, and it is difficult to perform highly accurate determination.

Before the dispensing nozzle 116 starts aspirating air, the pressure is around 0 kPa (atmospheric pressure) regardless of the presence or absence of water leakage. In a period (first period) during the aspiration from the start to the end of the aspiration of the air, the pressure first fluctuates in a negative (negative pressure) direction and then returns to the vicinity of the atmospheric pressure. In the first period, there is no large difference between the pressure waveform in the case where the electromagnetic valve is abnormal, such as foreign matter is mixed into the electromagnetic valve 128, and the pressure waveform in the case where the electromagnetic valve is normal. It is considered that an influence of the driving of the dispensing syringe 127 on pressure fluctuation is larger than an influence of the state of the electromagnetic valve 128 on pressure fluctuation.

Next, in a period (second period) from the end of the aspiration of air to the start of the discharge of air, the pressure repeatedly fluctuates in a positive (positive pressure) direction and the negative (negative pressure) direction, and gradually approaches the atmospheric pressure. In particular, since a pressure loss occurs inside the dispensing flow passage 125 due to water leakage from the tip end of the dispensing nozzle 116 in the case where the electromagnetic valve is abnormal, an attenuation of the pressure is larger and an amplitude of the pressure waveform is smaller than in the case where the electromagnetic valve is normal.

Thereafter, in a period (third period) during the discharge from the start to the end of the discharge of the air, the pressure fluctuates in the positive (positive pressure) direction and then returns to the vicinity of the atmospheric pressure. In the third period, there is no large difference between the pressure waveform in the case where the electromagnetic valve is abnormal and the pressure waveform in the case where the electromagnetic valve is normal. It is considered that the influence of the driving of the dispensing syringe 127 on the pressure fluctuation is larger than the influence of the state of the electromagnetic valve 128 on the pressure fluctuation.

Next, in a period (fourth period) from the end of the discharge of the air to the movement of the dispensing mechanism 105, the pressure repeatedly fluctuates in the negative (negative pressure) direction and the positive (positive pressure) direction, and gradually approaches the atmospheric pressure. In particular, since the pressure loss occurs inside the dispensing flow passage 125 due to water leakage from the tip end of the dispensing nozzle 116 in the case where the electromagnetic valve is abnormal, the attenuation of the pressure is larger and the amplitude of the pressure waveform is smaller than in the case where the electromagnetic valve is normal. That is, in the case where the electromagnetic valve is abnormal, the vibration time width, which is a time from the end of the discharge of the air until the pressure is attenuated to near the atmospheric pressure and stabilized, is shorter than that in the case where the electromagnetic valve is normal.

In the present specification, for example, the vibration time width of the pressure waveform after the end of air discharge is defined as "a time required from a start point to an end point when the start point is the end of air discharge and the end point is a time point when a state where pressure fluctuation from a reference pressure value is within ±0.5 kPa continues for a predetermined time or more". The reference pressure value may be 0 kPa or a pressure value acquired at the start of air aspiration. In addition, the predetermined time can be set to any time such as 30 ms. For example, in FIG. 4, the vibration time width in the case where the electromagnetic valve is normal is indicated by Δt0, and the vibration time width in the case where the electromagnetic valve is abnormal is indicated by Δt1. Further, an extraction target period of the vibration time width is not limited to the fourth period, and the vibration time width may be extracted from the pressure waveform in the second period when the pressure fluctuation sufficiently converges even in the second period.

As described above, the pressure waveform varies depending on whether water leaks. Therefore, the feature extraction unit 131 extracts, as one of the features for determining whether water leaks, from the pressure waveform, a pressure average value that is an average value of a pressure of the peak or valley portion present in the pressure waveform in any one of the first period to the fourth period. The peak or valley portion in each period (time zone in which the peak or valley appears may be specified based on a driving pattern of the dispensing syringe 127 stored in advance in the storage unit 115a, or may be specified based on the pressure waveform in the case where the electromagnetic valve is normal. In addition, as described above, in the first period and the third period, since there is no large difference in the pressure waveform between the case where the electromagnetic valve is abnormal and the case where the electromagnetic valve is normal, the feature extraction unit 131 may extract the pressure average value corresponding to the peak or the valley only in the second period and the fourth period.

On the other hand, a pressure average value threshold serving as a reference for determining whether water leaks is stored in the storage unit 115a. In FIG. 4, P2 indicates a pressure average value threshold corresponding to the first peak in the pressure waveform in the second period, and P4 indicates a pressure average value threshold corresponding to the first valley in the pressure waveform in the fourth period. For example, a value whose amplitude is smaller by a predetermined amount than a peak of the peak or the valley in the case where the electromagnetic valve is normal is set as the pressure average value threshold. The feature comparison unit 115b compares the pressure average value, which is the feature extracted by the feature extraction unit 131, with the pressure average value threshold stored in the storage unit 115a.

In addition, the feature extraction unit 131 may extract the above-described vibration time width as another feature for determining whether water leaks. In this case, the feature comparison unit 115b compares the vibration time width extracted by the feature extraction unit 131 with a vibration time width threshold stored in the storage unit 115a to determine whether water leaks. For example, a value shorter than Δt0, which is the vibration time width in the case where the electromagnetic valve is normal, by a predetermined time is set as the vibration time width threshold.

Further, the feature extraction unit 131 may extract the vibration frequency of the pressure waveform as still another feature for determining whether water leaks. FIG. 5 is a graph of a vibration frequency distribution acquired by the feature extraction unit when the dispensing nozzle aspirates and discharges air. A solid line shows an example of an abnormal state where water leaks due to an electromagnetic valve failure is present, and a dotted line shows an example of a normal state where water does not leak. The vibration frequency distribution shown in FIG. 5 is calculated by the feature extraction unit 131 applying an arithmetic such as Fourier transform to the pressure data acquired from the A/D converter 130. The pressure data used for the arithmetic may be normalized with respect to the atmospheric pressure or may be normalized with respect to data of the first point.

As shown in FIG. 5, in the case where the electromagnetic valve is normal, a peak is observed at a predetermined low frequency component, but in the case where the electromagnetic valve is abnormal, since the attenuation of the pressure is large and the amplitude of the pressure waveform is small, a peak is observed at 0 Hz (DC component) . Therefore, a value smaller by a predetermined amount than a frequency that is the peak in the normal case may be stored in the storage unit 115a as the vibration frequency threshold, and whether water leaks may be determined based on whether the peak is present in a frequency region higher than the threshold. In addition, when the peak of the vibration frequency extracted by the feature extraction unit 131 becomes 0 Hz, it may be determined that water leaks without comparing with the threshold.

As described above, the feature extraction unit 131 extracts the features such as the pressure average value, the vibration time width of the pressure waveform, and the vibration frequency of the pressure waveform. The feature comparison unit 115b performs the comparison using these features, but the comparison method is not limited to comparison with an absolute value of the threshold. For example, the feature comparison unit 115b may compare whether a difference between the feature in the normal state and the extracted feature is within a predetermined range (threshold). In addition, the feature comparison unit 115b may calculate only the difference, and the abnormality determination unit 115c may determine whether water leaks depending on whether the difference is within the predetermined range.

The abnormality determination unit 115c may periodically monitor a time-series change (for example, a change amount per unit time) of the feature and the like based on the data such as the feature or the pressure waveform stored in the storage unit 115a, and diagnose that there is a sign of water leakage when there is a change exceeding a predetermined allowable value. When there is a sign of water leakage as a result of such a sign diagnosis, the abnormality determination unit 115c outputs a preventive alarm to the display unit 124. In addition, the abnormality determination unit 115c may predict a water leakage time and the like by obtaining an approximate curve from the time-series change, and output a recommended maintenance time and the like to the display unit 124.

Further, a determination result by the abnormality determination unit 115c may be periodically transmitted to a server of a service center connected to the control unit 115 via a network and the like. Accordingly, the service center can also confirm the recommended maintenance time and the like, and can perform maintenance at an appropriate timing. In addition, it is also possible to improve the accuracy of the threshold used for water leakage determination by aggregating data of a plurality of automatic analyzers in the server of the service center and performing machine learning and the like.

The acquisition of the pressure data and the water leakage determination described above are performed at least at any timing of an analysis preparation operation, an analysis operation, and standby, and can be set at any timing such as once per hour, morning, daytime, and night. However, in order to prevent waste of the specimen and the reagent, it is desirable to execute the water leakage determination during the analysis preparation operation. The "timing of the analysis preparation operation" is a period during which various start-up processes are being executed after the automatic analyzer 100 is started up, the "timing of the analysis operation" is a period during which the automatic analyzer 100 is analyzing a specimen, and the "timing of the standby" is an idle state during which the automatic analyzer 100 is not analyzing a specimen.

In particular, during the analysis operation of the automatic analyzer 100, in order to prevent a change in concentration due to mixing of a pressure transmission medium (system water) filling the dispensing flow passage 125 and a specimen or reagent to be dispensed, separation air separating the pressure transmission medium and the specimen and the like is aspirated before aspirating the specimen and the like. Therefore, when the acquisition of the pressure data and the water leakage determination are performed during the analysis operation, it is desirable to use a timing of aspirating the separation air. Since the aspiration of the separation air is performed every time a specimen or a reagent is dispensed, there is an advantage that water leakage determination can be performed at a high frequency. As a result, even when water leaks during the analysis operation, it is possible to immediately determine that water leaks.

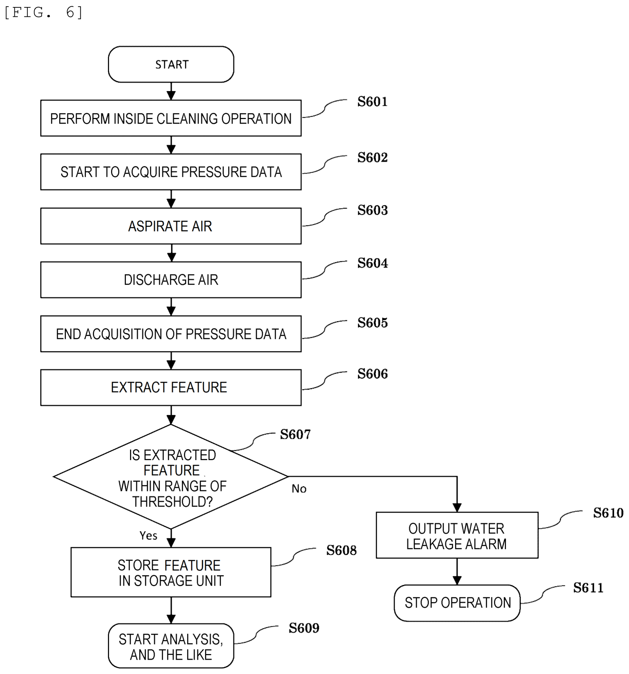

Next, a flow of a process of the automatic analyzer 100 at the time of water leakage determination will be described with reference to FIG. 6. FIG. 6 is a flowchart showing operations of the automatic analyzer at the time of water leakage determination in Embodiment 1.

First, the control unit 115 supplies internal cleaning water to the dispensing flow passage 125 in a state where the electromagnetic valve 128 is opened to clean the inside of the dispensing nozzle 116 (step S601). By performing the internal cleaning as described above before air is aspirated by the dispensing nozzle 116 for the water leakage determination, even when the water leakage determination is executed a plurality of times, conditions of the dispensing nozzle 116 and the dispensing flow passage 125 can be matched with the same conditions every time, and the accuracy of the water leakage determination is improved.

Thereafter, the control unit 115 drives the pressure sensor 126 to start acquiring the pressure data in the dispensing flow passage 125 (step S602). Further, the control unit 115 drives the dispensing syringe 127 in a state where the electromagnetic valve 128 is closed, and aspirates air into the dispensing nozzle 116 (step S603). Thereafter, the control unit 115 drives the dispensing syringe 127 in a state where the electromagnetic valve 128 is closed, and discharges air from the dispensing nozzle 116 (step S604). When the discharge of the air ends, the control unit 115 ends the acquisition of the pressure data by the pressure sensor 126 (step S605).

Next, the feature extraction unit 131 extracts, as a feature, at least one of the pressure average value, the vibration time width of the pressure waveform, and the vibration frequency of the pressure waveform from the acquired pressure data (step S606). Thereafter, the feature comparison unit 115b reads a threshold stored in advance in the storage unit 115a, and compares the feature extracted in step S606 with the read threshold (step S607).

When the comparison result in step S607 is within the range of the threshold (when the feature is equal to or larger than the threshold), the abnormality determination unit 115c determines that water does not leak (normal), and stores data such as the feature and the pressure waveform in the storage unit 115a (step S608). In addition, the analysis is started in the case of the water leakage determination during the analysis preparation operation, the analysis is continued or resumed in the case of the water leakage determination during the analysis operation, and the analysis returns to the standby state in the case of the water leakage determination during standby (step S609) .

On the other hand, when the comparison result in step S607 is outside the range of the threshold (when the feature is less than the threshold), the abnormality determination unit 115c determines that water leaks (abnormal), and outputs a water leakage alarm to the display unit 124 (step S610). In addition, when the water leakage determination is performed during the analysis operation, the analysis operation is stopped (step S611).

### Embodiment 2

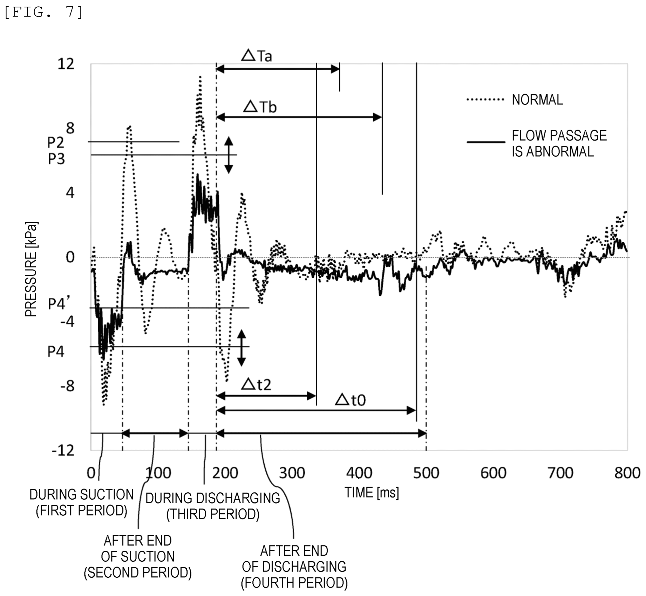

Embodiment 2 will be described with reference to FIGS. 7 to 9. An automatic analyzer of Embodiment 2 is basically the same as the automatic analyzer of Embodiment 1 in configuration, but unlike Embodiment 1, not only the presence or absence of water leakage but also a cause and portion of the water leakage is specified.

According to Embodiment 1, when it is determined that water leaks, waste of a specimen, a reagent, and a time can be avoided by outputting an alarm and stopping the automatic analyzer 100. However, at the time of subsequent maintenance, it is necessary to investigate the cause and portion of the water leakage. This is because the cause of water leakage from the dispensing mechanism 105 is not only an operation failure of an electromagnetic valve due to foreign matter mixing and the like but also a flow passage failure due to breakage of the dispensing flow passage 125, loosening of a flow passage connection portion, and the like. Therefore, in Embodiment 2, a threshold is further added to Embodiment 1 to compare the features more finely.

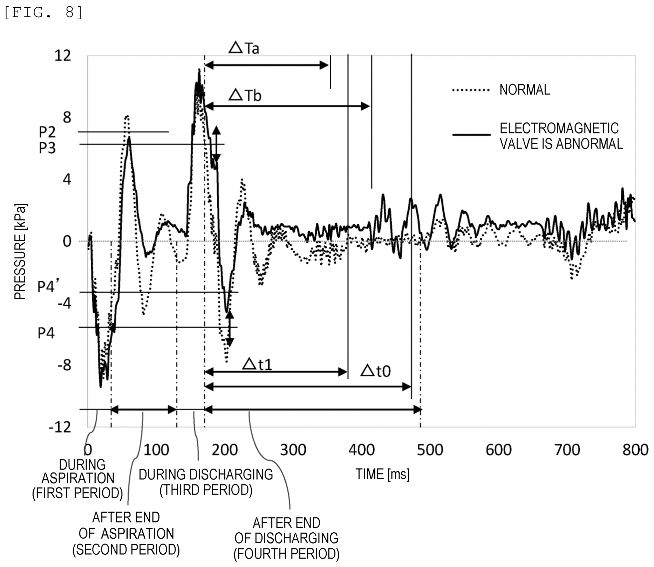

Next, a method of determining the presence or absence of water leakage and a cause and portion in Embodiment 2 will be described with reference to FIGS. 7 and 8. FIG. 7 is a graph of a pressure waveform acquired by a feature extraction unit when a dispensing nozzle aspirates and discharges air. A solid line shows an example of an abnormal state where water leaks due to a flow passage failure is present, and a dotted line shows an example of a normal state where water does not leak. FIG. 8 is a graph of a pressure waveform the same as FIG. 4, that is, a solid line shows an example of an abnormal state where water leaks due to an electromagnetic valve failure, and predetermined thresholds (P3, P4', ΔTa, ΔTb) are further added to FIG. 4.

Comparing FIG. 7 and FIG. 8, it can be seen that an amplitude of the pressure waveform is smaller as a whole in the case where water leaks due to the flow passage failure than in the case where water leaks due to the electromagnetic valve failure. This is because when the flow passage is abnormal, in addition to a pressure loss due to water leaks from the tip end of the dispensing nozzle 116, a pressure loss due to water leaks from an abnormal portion of the dispensing flow passage 125 also occurs. In addition, in the case where the flow passage is abnormal, a vibration time width, which is a time from the end of the aspiration or discharge of air until the pressure is attenuated to near the atmospheric pressure and stabilized, is shorter than that in the case where the electromagnetic valve is abnormal. A representative determination method based on such a tendency will be described below with reference to three examples.

A first determination method is a method of extracting a pressure average value of a peak or valley of the pressure waveform from the pressure data in the first period or the third period in which a difference between the case where the electromagnetic valve is normal and the case where the electromagnetic valve is abnormal is small, and comparing the pressure average value with the pressure average value threshold in these periods. In the examples of FIGS. 7 and 8, P3 is added as the pressure average value threshold corresponding to the peak portion in the third period. In the case where the flow passage is abnormal shown in FIG. 7, the pressure average value of the peak portion in the third period is less than the threshold P3 and can be regarded as abnormal, whereas in the case where the electromagnetic valve is abnormal shown in FIG. 8, the pressure average value of the peak portion in the third period exceeds the threshold P3 and cannot be regarded as abnormal. In the first period, when the pressure average value threshold corresponding to the valley portion is set, it is possible to distinguish whether the flow passage is abnormal as in the third period.

Therefore, even when the extracted pressure average value is smaller than the threshold and is regarded as abnormal in the second period or the fourth period, when the extracted pressure average value is larger than the threshold and is not regarded as abnormal in the first period or the third period, it can be determined that water leaks due to an electromagnetic valve failure. On the other hand, in any period, when the extracted pressure average value is smaller than the threshold and can be regarded as abnormal, it can be determined that water leaks due to a flow passage failure.

Next, a second determination method will be described. The second determination method is a method of setting two thresholds including a large threshold and a small threshold in the second period or the fourth period, and comparing the pressure average value extracted in the period with these thresholds. In the examples of FIGS. 7 and 8, in addition to P4, P4' is added as the pressure average value threshold corresponding to the valley portion in the fourth period. In the case where the flow passage is abnormal shown in FIG. 7, the pressure average value of the valley portion in the fourth period is less than the threshold P4 and less than the threshold P4', whereas in the case where the electromagnetic valve is abnormal shown in FIG. 8, the pressure average value of the valley portion in the fourth period is less than the threshold P4 but exceeds the threshold P4'. Therefore, when the pressure average value extracted in the fourth period is between the two thresholds, it can be determined that the electromagnetic valve is abnormal, and when the pressure average value is smaller than the two thresholds, it can be determined that the flow passage is abnormal. In the second period, when a threshold having an amplitude smaller than the threshold P2 is set separately from the threshold P2, it is possible to distinguish between the flow passage abnormality and the electromagnetic valve abnormality as in the fourth period.

Next, a third determination method will be described. The third determination method is a method of setting two thresholds including a large threshold and a small threshold for a vibration time width instead of the pressure average value, and comparing the extracted vibration time width with these thresholds. In the examples of FIGS. 7 and 8, a smaller threshold ΔTa and a larger threshold ΔTb are added as a vibration time width threshold in the fourth period. In the case where the flow passage is abnormal shown in FIG. 7, a vibration time width Δt2 in the fourth period is less than the threshold ΔTb and less than the threshold ΔTa, whereas in the case where the electromagnetic valve is abnormal shown in FIG. 8, the vibration time width Δt1 in the fourth period is less than the threshold Δb but exceeds the threshold Ta. Therefore, when the vibration time width extracted in the fourth period is between the two thresholds, it can be determined that the electromagnetic valve is abnormal, and when the vibration time width is smaller than the two thresholds, it can be determined that the flow passage is abnormal. Depending on the pressure waveform, it is possible to distinguish between the flow passage abnormality and the electromagnetic valve abnormality by setting two thresholds including a large threshold and a small threshold in the second period as in the fourth period.

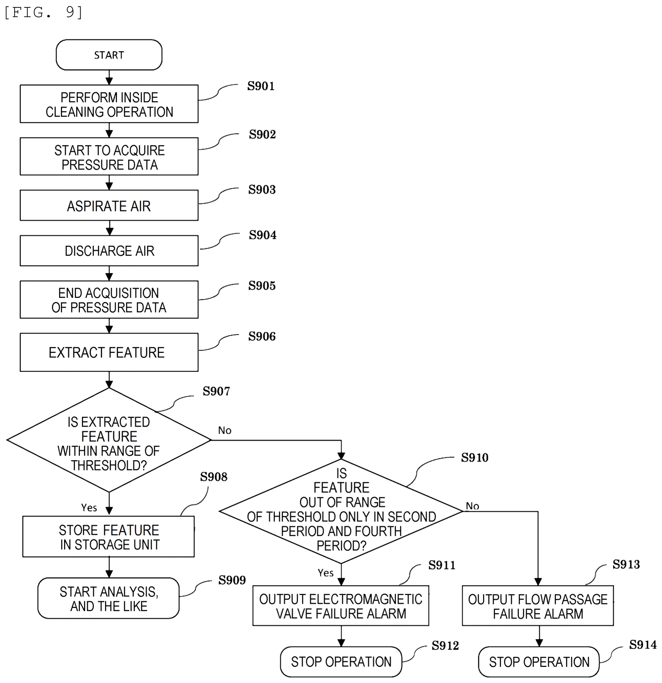

Next, a flow of a process of the automatic analyzer 100 at the time of water leakage determination will be described with reference to FIG. 9. FIG. 9 is a flowchart showing operations of the automatic analyzer at the time of water leakage determination in Embodiment 2. Here, a case of the first determination method among the above-described three determination methods will be described as an example.

First, steps S901 to S909 in FIG. 9 are the same as steps S601 to S609 in FIG. 6 described above. However, in the embodiment, when a determination result in step S907 is outside (less than) the range of the threshold in the second period or the fourth period, the feature comparison unit 115b reads the threshold in the first period or the third period stored in advance in the storage unit 115a, and compares the feature extracted in the period with the read threshold (step S910).

When the comparison result in step S910 is within the range of the threshold (when the feature is equal to or larger than the threshold), that is, when the comparison result is outside the range of the threshold only in the second period and the fourth period among the first period to the fourth period, the abnormality determination unit 115c determines that the electromagnetic valve is abnormal, and outputs an electromagnetic valve failure alarm to the display unit 124 (step S911). In addition, when the water leakage determination is performed during the analysis operation, the analysis operation is stopped (step S912).

On the other hand, when the determination result in step S910 is outside the range of the threshold (when the feature is less than the threshold), that is, when the determination result is outside the range of the threshold in all of the first period to the fourth period, the abnormality determination unit 115c determines that the flow passage is abnormal and outputs a flow passage failure alarm to the display unit 124 (step S913). In addition, when the water leakage determination is performed during the analysis operation, the analysis operation is stopped (step S914).

In the case of the second determination method or the third determination method in which a plurality of thresholds are set within the same period, the comparison method in step S910 among the above-described steps is different, and the other steps are the same as those in the case of the first determination method.

The invention is not limited to the embodiments described above, and includes various modifications. For example, as a negative pressure generation source, a diaphragm, a micropump, and the like may be used instead of the syringe. The determination method using the threshold described above is merely an example, and other methods can be appropriately used according to the structure of the dispensing mechanism and the like.

### Reference Signs List

- 101:: transport line
- 102:: rotor
- 103:: reagent disk
- 104:: reaction disk
- 105:: dispensing mechanism
- 106:: stirring mechanism
- 107:: spectroscope
- 108:: reaction cell cleaning mechanism
- 109:: nozzle cleaning mechanism
- 110:: specimen container
- 111:: specimen rack
- 112:: reaction cell
- 113:: reagent container
- 114:: shield portion
- 115:: control unit
- 115a:: storage unit
- 115b:: feature comparison unit
- 115c:: abnormality determination unit
- 116:: dispensing nozzle
- 117:: liquid level sensor
- 118:: arm
- 119:: dispensing mechanism motor
- 120:: LED light source
- 121:: specimen dispensing position
- 122:: reagent dispensing position
- 123:: input unit
- 124:: display unit
- 125:: dispensing flow passage
- 126:: pressure sensor
- 127:: dispensing syringe
- 128:: electromagnetic valve
- 129:: amplifier
- 130:: A/D converter
- 131:: feature extraction unit
- 132:: pump

## Claims

1. An automatic analyzer comprising:
a dispensing nozzle configured to dispense a specimen or reagent;
a pressure generation source configured to generate a pressure within the dispensing nozzle;
a flow passage via which the pressure generation source and the dispensing nozzle communicate with each other;
a pressure sensor configured to detect a pressure in the flow passage;
an electromagnetic valve provided in the flow passage, the electromagnetic valve being configured to open and close the flow passage; and
a control unit configured to determine whether water leaks based on a change in pressure data associated with aspiration or discharge of air by the dispensing nozzle.

2. The automatic analyzer according to claim 1, wherein the control unit is configured to
extract a pressure average value of peaks or valleys of a pressure waveform from the pressure data, and
determine whether water leaks by comparing the extracted pressure average value with a predetermined pressure average value threshold.

3. The automatic analyzer according to claim 2, wherein
the control unit is configured to extract the pressure average value of peaks or valleys of the pressure waveform from the pressure data in a second period from end of the aspiration of the air to start of the discharge of the air or pressure data in a fourth period after end of the discharge of the air, among the pressure data.

4. The automatic analyzer according to claim 3, wherein the control unit is configured to
extract the pressure average value of peaks or valleys of the pressure waveform also from pressure data in a first period during the aspiration of the air or pressure data in a third period during the discharge of the air,
determine that the electromagnetic valve is abnormal when the pressure average values extracted in the second period and the fourth period are smaller than respective pressure average value thresholds, and the pressure average values extracted in the first period and the third period are greater than respective pressure average value thresholds, and
determine that the flow passage is abnormal when the extracted pressure average value is smaller than the pressure average value threshold respectively in any of the first period, the second period, the third period, and the fourth period.

5. The automatic analyzer according to claim 1, wherein the control unit is configured to
extract a vibration time width of the pressure waveform from the pressure data in the fourth period after the end of the discharge of the air, and
determine whether water leaks by comparing the extracted vibration time width with a predetermined vibration time width threshold.

6. The automatic analyzer according to claim 3 or 5, wherein
the pressure average value threshold or the vibration time width threshold has two thresholds including a large threshold and a small threshold within one period, and
the control unit is configured to
determine that the electromagnetic valve is abnormal when the extracted pressure average value or vibration time width is between the two thresholds, and
determine that the flow passage is abnormal when the extracted pressure average value or vibration time width is smaller than any of the thresholds.

7. The automatic analyzer according to claim 1, wherein the control unit is configured to
extract a vibration frequency of a pressure waveform from the pressure data, and
determine whether water leaks by comparing the extracted vibration frequency with a predetermined vibration frequency threshold.

8. The automatic analyzer according to claim 1, wherein
the control unit is configured to clean inside of the dispensing nozzle before the air is aspirated by the dispensing nozzle.

9. The automatic analyzer according to claim 2, wherein
when the acquisition of the pressure data and the determination as to whether water leaks are performed during an analysis operation, the air is separation air that is aspirated before the specimen or reagent is aspirated to separate system water and the specimen or reagent in the dispensing nozzle.

10. A water leakage determination method of an automatic analyzer, the automatic analyzer including a dispensing nozzle configured to dispense a specimen or reagent, a pressure generation source configured to generate a pressure within the dispensing nozzle, a flow passage via which the pressure generation source and the dispensing nozzle communicate with each other, a pressure sensor configured to detect a pressure in the flow passage, and a control unit configured to determine whether water leaks based on pressure data acquired from the pressure sensor, the method comprising:
a step of aspirating or discharging air by the dispensing nozzle;
a step of detecting, by the pressure sensor, a change in pressure data in the flow passage associated with the aspiration or discharge of the air; and
a step of extracting at least one of a pressure average value of peaks or valleys of a pressure waveform, a vibration time width of the pressure waveform, and a vibration frequency of the pressure waveform from the pressure data, and comparing the extracted data with a predetermined threshold, by the control unit.

11. The water leakage determination method of an automatic analyzer according to claim 10, further comprising:
a step of cleaning inside of the flow passage and the dispensing nozzle by the control unit before the step of aspirating or discharging air by the dispensing nozzle.

12. The water leakage determination method of an automatic analyzer according to claim 10, wherein
when the acquisition of the pressure data and the determination as to whether water leaks are performed during an analysis operation, the air is separation air that is aspirated before the specimen or reagent is aspirated to separate system water and the specimen or reagent in the dispensing nozzle.
